# EUROPEAN PATENT APPLICATION

(11) **EP 4 538 487 A1**
(43) Date of publication of application: **16.04.2025**
(21) Application number: 24205771.9
(22) Date of filing: 10.10.2024
(51) Int. Cl.: E05D 3/10

(54) **COUPLING UNIT FOR COUPLING A DOOR TO A FRAME OF A VEHICLE**

(30) Priority: 13.10.2023 IT 202300021339
(71) Applicant: FERRARI S.p.A., 41100 Modena (IT)
(72) Inventor: DUSINI, Luca, 41100 MODENA (IT); NICOLETTA, Epifanio Alberto, 41100 MODENA (IT)
(74) Representative: Studio Torta S.p.A.

(57) **Abstract**

A coupling unit for coupling a door (5) to a frame (2) of a vehicle has a first coupling device (7) configured to be fixed to the frame (2) of the vehicle, and a second coupling device (9), which is configured to be fixed to the door (5) of the vehicle, and is connected to the first coupling device (7) so as to rotate, relative to the frame (2), around a rotation axis (24), which is variable in the space during the opening and the closing of the door (5).

## Description

### CROSS-REFERENCE TO RELATED APPLICATIONS

This patent application claims priority from Italian patent application no. 102023000021339 filed on October 13, 2023, the entire disclosure of which is incorporated herein by reference.

### TECHNICAL FIELD

The present invention relates to a coupling unit for coupling a door to a frame of a vehicle.

### BACKGROUND

In particular, the present invention relates to a coupling unit of the type comprising a first coupling element configured to be fixed to a door of a vehicle; and a second coupling element configured to be fixed to a frame of the vehicle.

Generally, the first coupling element is coupled in a rotatable manner to the second coupling element so as to allow the door to rotate, relative to the frame, around a fulcrum axis between a closed position and an open position.

The known coupling units of the type described above have some drawbacks mainly deriving from the fact that, following the movement of the door around the fulcrum axis from its closed position to its open position, the vehicle has a relatively large lateral bulk, measured transverse to a travel direction of the vehicle.

### SUMMARY

The object of the present invention is to provide a coupling unit for coupling a door to a frame of a vehicle which is free from the drawbacks set forth above and which is simple and inexpensive to manufacture.

According to the present invention, a coupling unit for coupling a door to a frame of a vehicle is provided as claimed in claims 1 to 7.

The present invention further relates to a vehicle.

According to the present invention, a vehicle as claimed in claims 8 and 9 is provided.

### BRIEF DESCRIPTION OF THE DRAWINGS

The present invention will now be described with reference to the accompanying drawings, which illustrate a non-limiting example embodiment thereof, wherein:
Figure 1 is a schematic perspective view, with parts removed for clarity, of a vehicle provided with a preferred embodiment of the coupling unit of the present invention;
Figures 2 to 4 are three schematic perspective views, with parts removed for clarity, of a detail of the vehicle of Figure 1 shown in three different operating positions;
Figures 5 to 7 are three schematic perspective views, with parts removed for clarity, of a detail of Figures 2 to 4 shown in three different operating positions;
Figure 8 is a schematic perspective view of a detail of Figures 5 to 7; and
Figure 9 schematically shows the operating principle of the detail of Figure 8.

### DESCRIPTION OF EMBODIMENTS

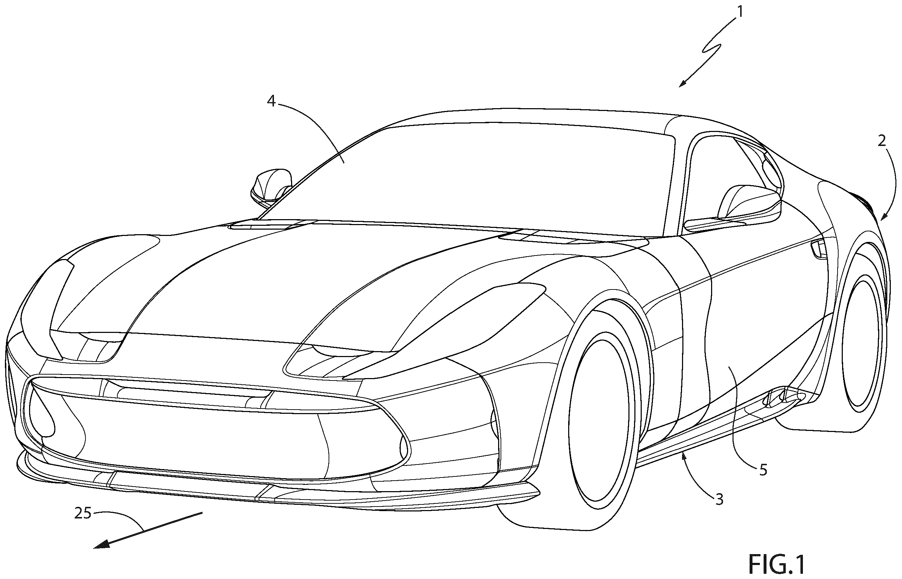

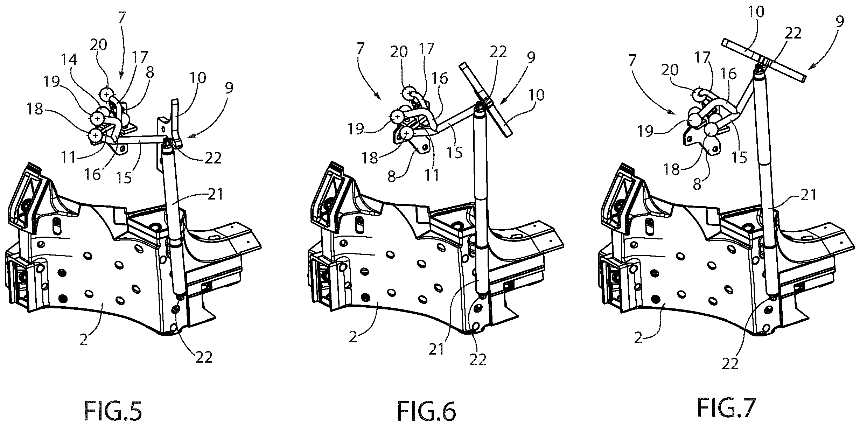

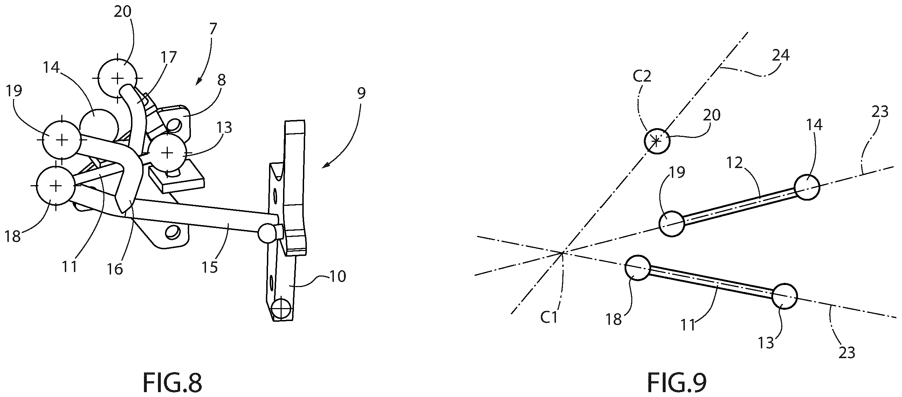

With reference to Figures 1 to 9, reference numeral 1 indicates, as a whole, a vehicle comprising a supporting frame 2 defining at least part of a lower floor 3 of the vehicle 1; and a passenger compartment 4, which is mounted on the frame 2, projects upwards from the floor 3, and is provided, in this case, with two doors 5.

Each door 5 is connected to the frame 2 through a relative coupling unit 6 comprising a first coupling device 7 configured to be fixed to the frame 2 through a fastening plate 8 and a second coupling device 9 configured to be fixed to the door 5 through a fastening plate 10.

The device 9 comprises two coupling rods 11, 12 connected to the plate 8 through respective ball joints 13, 14 obtained in part on the plate 8 and in part on the coupling rods 11, 12.

The device 9 further comprises three shaped rods 15, 16, 17, of which the rod 15 projects from the plate 10, the rod 16 projects from the rod 15, and the rod 17 projects from the rod 16.

Each rod 15, 16 is connected to a relative coupling rod 11, 12 through a relative ball joint 18, 19 obtained in part on the rod 15, 16 and in part on the coupling rod 11, 12.

The rod 17 is connected to the plate 8 through a ball joint 20 obtained in part on the plate 8 and in part on the rod 17.

The unit 6 further comprises a variable-length tie rod 21, which extends between the frame 2 and the door 5, and is coupled to the frame 2 and to the door 5 through the interposition of respective ball joints 22.

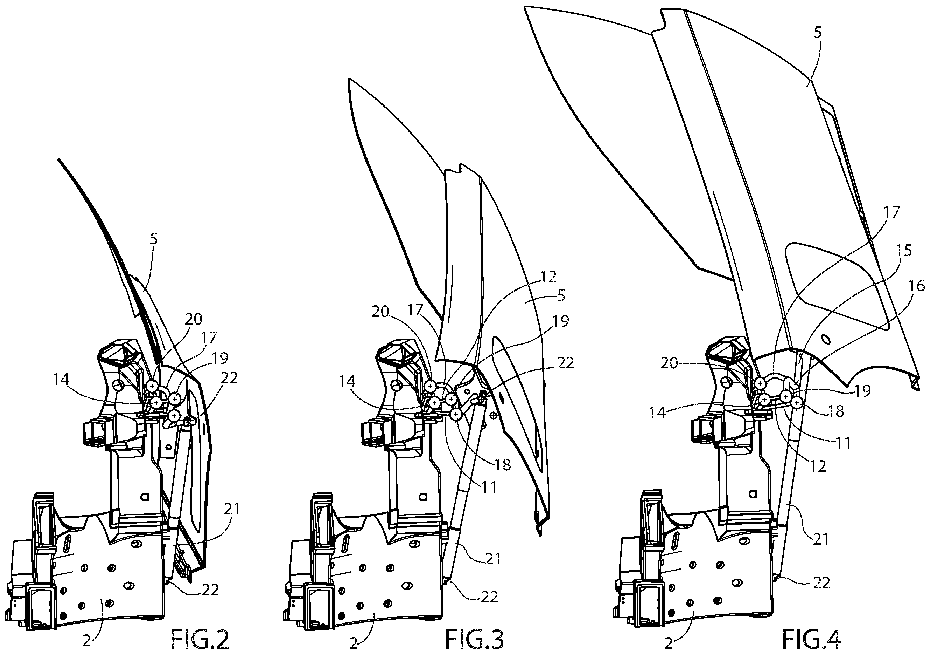

The unit 6 allows the door 5 to move between a closed position (Figure 2), an open position (Figure 4), and an intermediate position (Figure 3).

The coupling rods 11, 12 have respective longitudinal axes 23 which intersect one another in a rotation centre C1, the position of which in the space varies following the movement of the door 5 between its open position and its closed position.

Consequently, the door 5 is movable around a rotation axis 24, which extends through the centre C1 and through a rotation centre C2 of the joint 20, and has a position in the space which varies following the movement of the door 5 between its open position and its closed position.

The vehicle 1 has some advantages mainly deriving from the fact that each coupling unit 6 is configured to move the relative door 5 progressively along a substantially curvilinear trajectory comprising a first section, in which the movement of the door 5 between the closed position and the intermediate position has a component of horizontal motion, and a second section, in which the movement of the door 5 between the intermediate position and the open position has a component of vertical motion.

Consequently, the movement of the door 5 from its closed position to its open position around the rotation axis 24 involves a relatively reduced lateral bulk of the vehicle 1, measured transverse to a travel direction 25 of the vehicle 1, and allows the vehicle 1 to be parked in relatively narrow spaces.

## Claims

1. A coupling unit for coupling a door (5) to a frame (2) of a vehicle, the coupling unit comprising a first coupling device (7) configured to be fixed to the frame (2) of the vehicle; and a second coupling device (9) configured to be fixed to the door (5) of the vehicle and movable, relative to the first coupling device (7), between an open position and a closed position of the door (5); and being **characterized in that** the second coupling device (9) is connected to the first coupling device (7) so as to rotate, relative to the frame (2), around a rotation axis (24), which is variable in the space during the opening and the closing of the door (5).

2. The coupling unit according to claim 1 and further comprising a variable-length tie rod (21) configured to be connected to the door (5) and to the frame (2).

3. The coupling unit according to claim 2, wherein the variable-length tie rod (21) is configured to be connected to the door (5) and to the frame (2) through respective first ball joints (22).

4. The coupling unit according to any one of the preceding claims, wherein the second coupling device (9) comprises two coupling rods (11, 12), each configured to be connected to the first coupling device (7) through a relative second ball joint (13, 14).

5. The coupling unit according to claim 4, wherein the second coupling device (9) further comprises two coupling elements (15, 16), each connected to a relative coupling rod (11, 12) through a relative third ball joint (18, 19).

6. The coupling unit according to claim 5, wherein the second coupling device (9) further comprises a further coupling element (17) configured to be connected to the first coupling device (7) through a fourth ball joint (20).

7. The coupling unit according to claim 6, wherein the coupling rods (11, 12) have respective longitudinal axes (23) intersecting one another in a rotation centre (C1), which is variable in the space; the rotation axis (24) extending through the rotation centre (C1) defined by the longitudinal axes (23) of the coupling rods (11, 12) and through a rotation centre (C2) of the fourth ball joint (20) .

8. A vehicle comprising a frame (2); a door (5); and a coupling unit (6) for coupling the door (5) to the frame (2); the coupling unit (6) comprising a first coupling device (7) fixed to the frame (2) and a second coupling device (9) fixed to the door (5) and movable, relative to the frame (2), between an open position and a closed position of the door (5); and **characterized in that** the second coupling device (9) is connected to the first coupling device (7) so as to rotate, relative to the frame (2), around a rotation axis (24), which is variable in the space during the opening and the closing of the door (5).

9. The vehicle according to claim 8, wherein the coupling unit (6) is further designed according to any one of the claims from 2 to 7.
